# EUROPÄISCHE PATENTSCHRIFT

(11) **EP 2 176 356 B1**
(45) Veröffentlichungstag und Bekanntmachung des Hinweises auf die Patenterteilung: **22.02.2012**
(21) Anmeldenummer: 08774532.9
(22) Anmeldetag: 30.06.2008
(51) Int. Cl.: C09B 5/62, C09B 67/22, C08K 5/00

(54) **WÄSSRIGE SYNTHESE VON PERYLENPIGMENTEN**
AQUEOUS SYNTHESIS OF PERYLENE PIGMENTS
SYNTHÈSE AQUEUSE DE PIGMENTS DE PÉRYLÈNE

(30) Priorität: 03.07.2007 EP 07111661
(43) Veröffentlichungstag der Anmeldung: 21.04.2010
(73) Patentinhaber: BASF SE, 67056 Ludwigshafen (DE)
(72) Erfinder: LÖBEL, Johannes, 68165 Mannheim (DE); STOHR, Andreas, 67251 Freinsheim (DE)
(86) Internationale Anmeldenummer: PCT/EP2008/058378
(87) Internationale Veröffentlichungsnummer: WO 2009/003980

(56) Entgegenhaltungen:
- EP-A- 0 979 846
- WO-A-2005/078023
- US-A1- 2003 167 971
- FEILER L ET AL: "SYNTHESIS OF PERYLENE-3,4-DICARBOXIMIDES - NOVEL HIGHLY PHOTOSTABLEFLUORESCENT DYES" LIEBIGS ANNALEN: ORGANIC AND BIOORGANIC CHEMISTRY, VCH PUBLISHERS, US, Bd. 7, 1. Januar 1995 (1995-01-01), Seiten 1229-1244, XP001041286 ISSN: 0947-3440
- W.HERBST,K.HUNGER: "Industrielle Organische Pigmente" 1995, VCH , WEINHEIM,NEW YORK,BASEL,CAMBRIDGE,TOKYO , XP002529261 Seite 484, Absatz 3.4.1.2
- I.LUKAC, H.LANGHALS: "Darstellung und Fluoreszenzverhalten von 2,3,4,4a,10a,11, 12,13-Octahydro-1,4a,10,14-tetraazaviolan- thron-Derivaten" CHEM.BER., Bd. 116, 1983, Seiten 3524-3528, XP002529260
- LANGHALS H ET AL: "Perylenamidine-imide dyes" LIEBIGS ANNALEN: ORGANIC AND BIOORGANIC CHEMISTRY, VCH PUBLISHERS, US, 1. Januar 1995 (1995-01-01), Seiten 481-486, XP002189733 ISSN: 0947-3440

## Beschreibung

Die vorliegende Erfindung betrifft Verfahren zur Herstellung von Perylenpigmenten. Weiterhin betrifft die Erfindung die Verwendung von Perylenpigmenten zum Einfärben von hochmolekularen organischen und anorganischen Materialien natürlicher und synthetischer Herkunft, insbesondere von Lacken, Druckfarben, Tinten, Polymeren, Anstrichmitteln, Kunststoffartikeln, Gläsern, silikatischen Schichtsystemen und organischanorganischen Kompositen. Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen.

Die Herstellung von halogenierten Perylentetracarboxyl-bis-benzimidazolen in Substanz ist im Zusammenhang mit der Herstellung von Küpenfarbstoffen bereits schon lange, beispielsweise aus der US 1,808,260, bekannt. Durch die Zersetzungsprodukte wird das Produkt jedoch verunreinigt, sodass die Migrationsechtheit im Anwendungsmedium eingeschränkt ist. Aufgrund der teilweise kostenintensiven Diaminrohstoffe ist eine derartige Herstellung oft nicht wirtschaftlich.

Perylentetracarboxyl-bis-benzimidazole werden häufig durch die Umsetzung von einem Äquivalent Perylentetracarbonsäure, deren Anhydrid oder halogenierten Derivaten der beiden Verbindungen mit zwei Äquivalenten eines Diamins durch eine Kondensationsreaktion hergestellt.

US 1,878,986 beschreibt ein Verfahren zur Herstellung von halogenierten Perylentetracarboxyl-bis-benzimidazolen, die bevorzugt in aromatischen Alkoholen (Phenol, Kresol etc.) oder Eisessig umgesetzt werden. Zur Reaktionsbeschleunigung können wasserfreie, basische Alkalisalze oder Kupferverbindungen eingesetzt werden.

WO 2005/078023 beschreibt die Synthese von Perylenpigmenten durch Kondensation von Perylen-3,4:9,10-tetracarbonsäuredianhydrid in hochsiedenden Lösungsmitteln wie Phenol, Nitrobenzol, Naphthalin bzw. Naphthalinderivaten. Die zweistufige Reaktion wird durch Zugabe von Katalysatoren, wie Zinkacetat, Zinkchlorid, Zinkoxid, Essigsäure, Salzsäure, para-Toluolsulfonsäure oder Aminen beschleunigt. Bevorzugt wird bei dem beschriebenen Verfahren Phenol als Lösungsmittel eingesetzt und bei Temperaturen zwischen 160 und 180 °C gearbeitet. Während der Reaktion wird das Reaktionswasser als Azeotrop mit Phenol abdestilliert.

FR 852.254 verweist auf die Problematik der Umsetzung bei niedrigeren Temperaturen. Bei der Kondensation von Perylentetracarbonsäure oder deren Derivaten mit einem geringen Überschuss an 1,2-Diaminobenzol in Nitrobenzol bzw. Eisessig bei 120 °C erhält man N,N'-Di-(o-amino)-aryl-perylentetracarboxyl-diimide oder 3,4-Benzimidazol-9,10-(o-amino)-aryl-perylentetracarboxyl-diimide. Beide Produkte sind Küpenfarbstoffe und keine Pigmente.

Eine weitere Vorschrift zur Herstellung unterschiedlicher Perylenpigmente ist in CH 373844 beschrieben. Durch die Umsetzung in organischen Lösungsmitteln oder Wasser werden unter stark verdünnten Synthesebedingungen Pigmentfarbstoffe hergestellt. Als Kondensationsmittel werden Metallhalogenide wie Zink- und Aluminiumchlorid eingesetzt, die Reaktion kann aber auch in Anwesenheit von Katalysatoren, wie Schwefelsäure, Phosphorsäure oder Lewissäuren durchgeführt werden.

Im Allgemeinen können durch die Verwendung von hochsiedenden Lösungsmitteln Rückstände in den Pigmenten nicht vermieden werden, da Lösungsmittelmoleküle beim Bildungsprozess der Pigmente häufig im Kristallgitter eingeschlossen werden oder an der Aggregation oder Agglomeration von Primärteilchen der Pigmente mitwirken und auch bei sehr hohen Trockentemperaturen oft nicht zu entfernen sind. Bei der Verarbeitung in Kunststoffen, Lacken oder anderen Anwendungsmedien werden die Agglomerate oder Aggregate von Primärteilchen oft zerstört und das Restlösemittel oft unerwünscht freigesetzt.

Die hohe Nachfrage nach metall- und lösemittel freien Farbmitteln, insbesondere Pigmenten, ist, insbesondere auch aus Umweltschutzgesichtspunkten, ungebrochen. Es war daher eine Aufgabe der Erfindung, ein einfach durchzuführendes Verfahren zur Herstellung von Perylenpigmenten bereitzustellen, bei dem der Gehalt an organischen Lösungsmittelresten und/oder Metallen in den fertigen Pigmenten minimiert bzw. vollständig vermieden wird.

Diese und andere Aufgaben werden, wie aus dem Offenbarungsgehalt der vorliegenden Erfindung ersichtlich, durch die verschiedenen Ausführungsformen des erfindungsgemäßen Verfahrens, die im weiteren beschrieben sind, gelöst.

Dementsprechend wurde ein Verfahren zur Herstellung von Perylenpigmenten der allgemeinen Formel (la) oder (Ib) 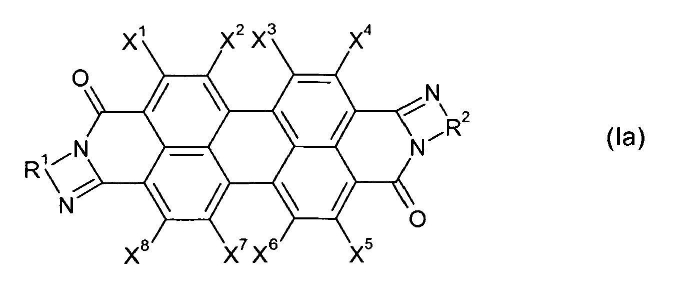 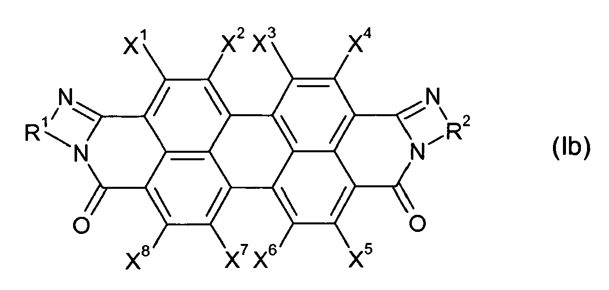 oder von deren Gemischen, gefunden,
mit
- R¹, R²: unabhängig voneinander, gleich oder verschieden, Phenylen, Naphthylen oder Pyridylen,
wobei R¹, R² jeweils ein- oder mehrfach durch C₁-C₂₂-Alkyl, C₁-C₂₂-Alkoxy, Hydroxy und/oder Halogen substituiert sein können,
- X¹, X², X³, X4, X5, X⁶, X⁷, X⁸: unabhängig voneinander, gleich oder verschieden, Wasserstoff oder Halogen sein können,
wobei Perylentetracarbonsäuren oder deren funktionelle Derivate mit aromatischen Diaminen in Gegenwart eines sekundären oder tertiären Amins in einem wäßrigen Reaktionsmedium umgesetzt werden.

Der Begriff "Gemisch" soll dabei physikalische Mischungen wie auch bevorzugt feste Lösungen (Mischkristalle) der Verbindungen (la) und (Ib) umfassen.

Ausdrücke der Form Cₐ-C_{b} bezeichnen im Rahmen dieser Erfindung chemische Verbindungen oder Substituenten mit einer bestimmten Anzahl von Kohlenstoffatomen. Die Anzahl an Kohlenstoffatomen kann aus dem gesamten Bereich von a bis b, einschließlich a und b gewählt werden, a ist mindestens 1 und b immer größer als a. Eine weitere Spezifizierung der chemischen Verbindungen oder der Substituenten erfolgt durch Ausdrücke der Form Cₐ-C_{b}-V. V steht hierbei für eine chemische Verbindungsklasse oder Substituentenklasse, beispielsweise für Alkylverbindungen oder Alkylsubstituenten.

Halogen steht für Fluor, Chlor, Brom, oder lod, vorzugsweise für Fluor, Chlor oder Brom, besonders bevorzugt für Chlor oder Brom.

Im einzelnen haben die für die verschiedenen Substituenten angegebenen Sammelbegriffe folgende Bedeutung:

C₁-C₂₂-Alkyl: geradkettige oder verzweigte Kohlenwasserstoffreste mit bis zu 22 Kohlenstoffatomen, bevorzugt C₁-C₁₂-Alkyl, beispielsweise C₁-C₁₀-Alkyl oder C₁₁-C₂₂-Alkyl, weiterhin bevorzugt C₁-C₁₀-Alkyl, beispielsweise C₁-C₃-Alkyl, wie Methyl, Ethyl, Propyl, Isopropyl, oder C₄-C₆-Alkyl, n-Butyl, sec-Butyl, tert.-Butyl, Pentyl, 2-Methylbutyl, 1,1-Dimethylpropyl, 1,2-Dimethylpropyl, 2,2-Dimethylpropyl, 1-Ethylpropyl, Hexyl, 2-Methylpentyl, 3-Methyl-pentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Tri-methylpropyl, 1-Ethyl-1-methylpropyl, 1-Ethyl-2-methylpropyl, oder C₇-C₁₀-Alkyl, wie Heptyl, Octyl, 2-Ethyl-hexyl, 2,4,4-Trimethylpentyl, 1,1,3,3-Tetramethylbutyl, Nonyl oder Decyl sowie deren Isomere.

C₃-C₂₂-Alkenyl: ungesättigte, geradkettige oder verzweigte Kohlenwasserstoffreste mit 3 bis 22 Kohlenstoffatomen und einer Doppelbindung in einer beliebigen Position, beispielsweise C₃-C₁₀-Alkenyl oder C₁₁-C₂₂-Alkenyl, bevorzugt C₃-C₁₀-Alkenyl wie C₃-C₄-Alkenyl, wie 1-Propenyl, 2-Propenyl, 1-Methylethenyl, 1-Bute-nyl, 2-Butenyl, 3-Butenyl, 1-Methyl-1-propenyl, 2-Methyl-1-propenyl, 1-Methyl-2-pro-penyl, 2-Methyl-2-propenyl, oder C₅-C₆-Alkenyl, wie 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl oder 1-Ethyl-2-methyl-2-propenyl, sowie C₇-C₁₀-Alkenyl, wie die Isomere von Heptenyl, Octenyl, Nonenyl oder Decenyl.

C₁-C₂₂-Alkoxy: bedeutet eine geradkettige oder verzweigte Alkylgruppe mit 1 bis 22 Kohlenstoffatomen (wie vorstehend genannt), welche über ein Sauerstoffatom (-O-) an gebunden sind, beispielsweise C₁-C₁₀-Alkoxy oder C₁₁-C₂₂-Alkoxy, bevorzugt C₁-C₁₀-Alkyloxy, insbesondere bevorzugt C₁-C₆-Alkoxy, wie beispielweise Methoxy, Ethoxy, Propoxy, Butoxy, Pentoxy, Hexoxy.

Aryl: ein ein- bis dreikerniges aromatisches Ringsystem enthaltend 6 bis 14 Kohlenstoffringglieder, z. B. Phenyl, Naphthyl oder Anthracenyl, bevorzugt ein ein- bis zweikerniges, besonders bevorzugt ein einkerniges aromatisches Ringsystem.

Heterocyclen: fünf- bis zwölfgliedrige, bevorzugt fünf- bis neungliedrige, besonders bevorzugt fünf- bis sechsgliedrige, Sauerstoff-, Stickstoff- und/oder Schwefelatome, gegebenenfalls mehrere Ringe aufweisende Ringsysteme wie Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl. Beispielsweise auch Piperidinyl oder Pyrrolidinyl.

C₃-C₁₂-Cycloalkyl: monocyclische, gesättigte Kohlenwasserstoffgruppen mit 3 bis zu 12 Kohlenstoffringgliedern, bevorzugt C₃-C₈-Cycloalkyl wie Cyclopropyl, Cyclobutyl, Cyclopentyl, Cyclohexyl, Cycloheptyl oder Cyclooctyl.

Im Rahmen des erfindungsgemäßen Verfahrens können die Phenylen-, Naphthylen-und Pyridylenreste R¹ und R² in den Formeln (la) und (Ib) bevorzugt ein- oder mehrfach durch C₁-C₁₂-Alkyl, insbesondere C₁-C₄-Alkyl, C₁-C₆-Alkoxy, vor allem C₁-C₄-Alkoxy, Hydroxy und/oder Halogen, insbesondere Chlor oder Brom, substituiert sein.

Bevorzugt sind in einer Ausführungsform des erfindungsgemäßen Verfahrens die Phenylen-, Naphthylen- und Pyridylenreste jedoch unsubstituiert, wobei die Phenylen- und Naphthylenreste besonders bevorzugt und die Naphthylenreste ganz besonders bevorzugt sind.

Bevorzugt sind höchstens vier der Substituenten X¹ bis X⁸ Halogen, insbesondere Chlor. Ganz besonders bevorzugt sind alle Substituenten X¹ bis X⁸ Wasserstoff.

Bevorzugt bzw. besonders bevorzugt sind diejenigen Ausführungsformen des erfindungsgemäßen Verfahrens, bei denen die Substituenten R¹, R² und X¹ bis X⁸ ihre bevorzugte bzw. besonders bevorzugte Bedeutung annehmen.

Die Herstellung von Perylenpigmenten der allgemeinen Formel (la) oder (Ib) oder von deren Gemischen erfolgt erfindungsgemäß durch Umsetzung von Perylentetracarbonsäuren oder deren funktionellen Derivaten mit aromatischen Diaminen in Gegenwart eines sekundären oder tertiären Amins in einem wäßrigen Reaktionsmedium.

Unter "Perylentetracarbonsäuren" sind Perylen-3,4:9,10-tetracarbonsäuren zu verstehen.

Die im Rahmen des erfindungsgemäßen Verfahrens eingesetzten Perylentetracarbonsäuren oder deren funktionellen Derivate und Diamine sind entweder kommerziell erhältlich oder können nach dem Fachmann bekannten Verfahren hergestellt werden (W. Herbst, K. Hunger, "Industrielle organische Pigmente", 1987, VCH Verlag, Weinheim, S. 473ff).

Unter den "funktionellen Derivaten" der Perylentetracarbonsäuren werden solche Verbindungen verstanden, die unter den Reaktionsbedingungen des erfindungsgemäßen Verfahrens mit den Diaminen zu Perylenpigmenten reagieren können. Insbesondere sind hier die Perylentetracarbonsäureanhydride (Perylenbisanhydride), Perylentetracarbonsäurechloride oder Salze der Perylentetracarbonsäuren zu nennen. Bevorzugt werden Perylenbisanhydride eingesetzt.

Perylentetracarbonsäuren oder deren funktionellen Derivate, insbesondere Perylenbisanhydrid, können als Ausgangsstoffe im erfindungsgemäßen Verfahren in Form von getrockneter Rohware, vorzerkleinerter Rohware oder bevorzugt als wasserfeuchter Presskuchen, der bei der Synthese anfällt (W. Herbst, K. Hunger, "Industrielle organische Pigmente", 1987, VCH Verlag, Weinheim, S. 473ff), eingesetzt werden.

Unter den "aromatischen Diaminen" sind im Rahmen der vorliegenden Erfindung die folgenden ortho- oder peri-Diamine zu verstehen: 1,2-Diaminobenzol, 2,3-Diaminopyridin, 3,4-Diaminopyridin, 4,5-Diaminopyrimidin, 1,8-Diaminonaphthalin, 4,5-Diamino-Chinolin, 4,5-Diamino-Isochinolin, 1,8-Diamino-Isochinolin. Bevorzugt werden 1,2-Diaminobenzol oder 1,8-Diaminonaphthalin eingesetzt.

Falls erwünscht, können in einer Ausführungsform des erfindungsgemäßen Herstellungsverfahren auch Gemische verschiedener aromatischer Diamine eingesetzt werden. Die Zusammensetzung kann je nach gewünschten Eigenschaften der Perylenpigmente über einen weiten Bereich variieren. Bevorzugt werden hierbei Gemische aus zwei verschiedenen Diaminen eingesetzt. Bevorzugt werden hierbei bis zu 10 Gew.-%, besonders bevorzugt bis zu 5 Gew.-%, des ersten Diamins durch das zweite Diamin ersetzt, um Perylenpigmente mit modifizierten Eigenschaften zu erhalten.

Das Molverhältnis des aromatischen Diamins zu Perylentetracarbonsäuren oder deren funktionellen Derivate, insbesondere Perylenbisanhydrid beträgt in der Regel von 1,8 : 1 bis 4 : 1, bevorzugt von 1,9 : 1 bis 3 : 1, besonders bevorzugt 1,9 : 1 bis 2,5 :1.

Falls mit einem Überschuss an Perylentetracarbonsäuren oder deren funktionellen Derivate, insbesondere Perylenbisanhydrid, bzw. aromatischem Diamin gearbeitet wird, kann nach erfolgter Umsetzung, beispielsweise zur entstandenen Pigmentsuspension, ein anorganisches basisches Salz, bevorzugt Kaliumcarbonat oder Kaliumhydroxid zugegeben werden bzw. mit anorganischer oder organischer Säure gewaschen werden, um Rohstoffreste zu lösen und bei der Filtration zu entfernen.

Im Rahmen des erfindungsgemäßen Herstellverfahrens wird die Umsetzung in Gegenwart eines sekundären oder tertiären Amins durchgeführt. Das sekundäre oder tertiäre Amin hat hierbei vermutlich die Rolle eines Katalysators für die Umsetzung und kann im Allgemeinen die Teilchengröße und Teilchenform der Pigmentprimärteilchen beeinflussen. Je nach Anwendung können daher abhängig vom gewählten sekundären oder tertiären Amin spezifische Perylenpigmentteilchen hergestellt werden.

Geeignete sekundären oder tertiäre Amine sind aliphatische, cycloaliphatische, arylaliphatische oder heterocyclische, sekundäre oder tertiäre Amine.

Im Allgemeinen weisen geeignete sekundäre Amine die Formel R'R"NH auf, wobei R',R" gleich oder verschieden, C₁-C₂₂-Alkyl, C₃-C₁₂-Cycloalkyl, Aryl oder Heterocyclen sein können, wobei R', R" durch Hydroxy-, C₁-C₆-Alkoxy-, C₁-C₆-Alky-, C₁-C₆-Alkylamino- oder Arylgruppen substituiert sein kann, oder R' und R" gemeinsam mit dem Stickstoffatom aus R'R"NH einen 5- oder 6-gliedrigen, heterocyclischen Ring bilden, der auch weitere Heteroatome enthalten kann. Bevorzugt sind R',R" gleich oder verschieden, C₁-C₈-Alkyl, C₃-C₈-Cycloalkyl, Aryl, die wie oben beschrieben substituiert sein können. Weiterhin bevorzugt bilden R' und R" gemeinsam mit dem Stickstoffatom einen 5- oder 6-gliedrigen, heterocyclischen Ring der noch ein weiteres Stickstoffatom enthalten kann.

Besonders bevorzugte sekundäre Amine sind Imidazol, Piperazin, N-Cyclohexylmethylamin und N-Cyclohexyl-ethylamin.

Im Allgemeinen weisen geeignete tertiäre Amine die Formel R'R"NR"' auf, wobei R',R" gleich oder verschieden, C₁-C₂₂-Alkyl, C₃-C₁₂-Cycloalkyl, Aryl oder Heterocyclen sein können, wobei R', R" durch Hydroxy-, C₁-C₆-Alkoxy-, C₁-C₆-Alky-, C₁-C₆-Alkylamino-oder Arylgruppen substituiert sein kann, oder R' und R" gemeinsam mit dem Stickstoffatom aus R'R"NR"' einen 5- oder 6-gliedrigen, heterocyclischen Ring bilden, der auch weitere Heteroatome enthalten kann. Bevorzugt sind R',R" gleich oder verschieden, C₁-C₈-Alkyl, C₃-C₈-Cycloalkyl, Aryl, die wie oben beschrieben substituiert sein können. Weiterhin bevorzugt bilden R' und R" gemeinsam mit dem Stickstoffatom einen 5- oder 6-gliedrigen, heterocyclischen Ring, der noch ein weiteres Stickstoffatom enthalten kann. Besonders bevorzugt sind Imidazol, Pyridin und Pyrimidin.

R'" ist C₁-C₂₂-Alkyl oder Aryl, wobei R'" durch Hydroxy-, C₁-C₆-Alkoxy-, C₁-C₆-Alky-, C₁-C₆-Alkylamino- oder Arylgruppen substituiert sein kann. Bevorzugt ist R'" C₁-C₆-Alkyl oder Aryl.

Bevorzugte sekundäre oder tertiäre Amine sind Piperazin, N-(2-Hydroxyethyl)piperazin, Diethanolamin, N,N'-Dimethylpiperazin, N-Ethylpiperazin, N-Methylcyclohexylamin, Imidazol, N-Methylimidazol oder Pyrrolidin. Ganz bevorzugte sekundäre Amine sind Piperazin, N-Methylcyclohexylamin. Ein ganz bevorzugtes tertiäres Amin ist N-Methylimidazol.

Das Molverhältnis des sekundären oder tertiären Amins zu Perylentetracarbonsäuren oder deren funktionellen Derivate, insbesondere Perylenbisanhydrid, beträgt im Allgemeinen von 0,5 : 1 bis 2 : 1, bevorzugt 0,8 : 1 bis 1,3 : 1.

In einer Ausführungsform des erfindungsgemäßen Herstellverfahrens kann das wässrige Reaktionsmedium geringe Mengen an inerten, mit Wasser mischbaren organischen Lösungsmitteln enthalten. Bevorzugt enthält das wässrige Reaktionsmedium weniger als 30 Gew.-% organisches Lösungsmittel, ganz bevorzugt sind weniger als 20 Gew.-% organisches Lösungsmittel im wässrigen Reaktionsmedium enthalten, insbesondere weniger als 10 Gew.-%. Im Allgemeinen ist es aus verfahrenstechnischen Gründen günstig, so wenig inertes organisches Lösungsmittel zu verwenden wie möglich, da die anschließende Abtrennung des Lösungsmittels vom Feststoff mit geringerem Aufwand möglich ist. Bevorzugt ist das organische Lösungsmittel ein Glykol oder Alkohol, beispielsweise Butylglykol, oder ein aromatischer stickstoffhaltiger Heterocyclus, beispielsweise N-Methylimidazol oder Imidazol. Ganz besonders bevorzugt ist das organische Lösungsmittel ein aromatischer stickstoffhaltiger Heterocyclus, beispielsweise N-Methylimidazol oder Imidazol.

In einer anderen Ausführungsform des erfindungsgemäßen Verfahrens enthält das wässrige Reaktionsmedium kein organisches Lösungsmittel. Bevorzugt enthält das wässrige Reaktionsmedium hierbei im wesentlichen nur Wasser. Diese Ausführungsform hat den verfahrenstechnischen Vorteil, dass kein organisches Lösungsmittel bei der Aufarbeitung abgetrennt werden muss.

Im Allgemeinen wird das wässrige Reaktionsmedium, das optional geringe Mengen an inertem organischen Lösungsmittel enthalten kann im Verhältnis zu den Perylentetracarbonsäuren oder deren funktionellen Derivaten im Überschuß eingesetzt. Bevorzugt liegt das verwendete Gewichtsverhältnis im Bereich von 50:1 bis 5:1. Ganz bevorzugt 20:1 bis 7:1.

In einer Ausführungsform des erfindungsgemäßen Herstellverfahrens kann das inerte organische Lösungsmittel gleichzeitig als Katalysator (sekundäres oder tertiäres Amin) fungieren. In diesem Falle ist das oben angegebene Molverhältnis des sekundären oder tertiären Amins zu Perylentetracarbonsäuren oder deren funktionellen Derivate natürlich nicht gültig, da das sekundäres oder tertiäres Amin im Überschuss vorliegt. In diesem Falle ist eine weitere Zugabe von sekundärem oder tertiärem Amin als Katalysator natürlich unnötig.

In einer weiteren Ausführungsform des erfindungsgemäßen Verfahrens können dem wässrigen Reaktionsmedium optional zusätzlich oberflächenaktive Substanzen zugegeben werden. Als oberflächenaktive Substanzen sind grundsätzlich ionische- oder nichtionische (polymere) Tenside geeignet. Beispiele für oberflächenaktive Substanzen die im erfindungsgemäßen Verfahren verwendet werden können sind Polyether, die nichtionisch oder anionisch modifiziert sein können, beispielsweise Ethoxylierungsprodukte langkettiger Alkohole oder Ethoxylierungsprodukte von Alkylphenolen.

Es können somit im wässrigen Reaktionsmedium sowohl verschiedene nichtionische als auch verschiedene ionische, insbesondere anionische, oberflächenaktive Substanzen sowie Mischungen von nichtionischen und ionischen, insbesondere anionischen, oberflächenaktiven Substanzen enthalten sein.

Beispiele für anionische oberflächenaktive Substanzen sind dabei die sauren Phosphorsäure-, Phosphonsäure-, Schwefelsäure- und/oder Sulfonsäureester der oben erwähnten modifizierten Polyether und/oder deren Salze.

Bei den oben erwähnten nichtionischen oberflächenaktiven Substanzen auf Polyetherbasis (nichtionisch modifizierte Polyether) handelt es insbesondere um Polyalkylenoxide oder Umsetzungsprodukte von Alkylenoxiden mit Alkoholen, Aminen, aliphatischen Carbonsäuren oder aliphatischen Carbonsäureamiden. Erfindungsgemäß soll dabei unter dem Begriff Alkylenoxid auch arylsubstiutiertes Alkylenoxid, insbesondere phenylsubstituiertes Ethylenoxid, verstanden werden.

Ganz besonders geeignet sind dabei Blockcopolymere, die Polypropylenoxid- und Polyethylenoxidblöcke oder auch Poly(phenylethylenoxid)- und Polyethylenoxidblöcke aufweisen. Sie können wie die ungemischten Polyalkylenoxide durch Polyaddition dieser Alkylenoxide an Starterverbindungen, wie an gesättigte oder ungesättigte aliphatische und aromatische Alkohole, gesättigte oder ungesättigte und aliphatische und aromatische Amine, gesättigte oder ungesättigte aliphatische Carbonsäuren und Carbonsäureamide, erhalten werden. Bei Einsatz von Ethylenoxid und Propylenoxid können diese Starterverbindungen zunächst mit Ethylenoxid und dann mit Propylenoxid oder vorzugsweise zunächst mit Propylenoxid und dann mit Ethylenoxid umgesetzt werden. Weitere Einzelheiten zu diesen Blockpolymeren können der WO 2004/009688 A2 (S. 7, Z. 20 - S.9, Z. 26) entnommen werden, auf die in diesem Zusammenhang explizit Bezug genommen wird.

Die Reaktionsbedingungen der Umsetzung im Rahmen des erfindungsgemäßen Verfahrens sind im Allgemeinen, abhängig beispielsweise vom verwendeten aromatischen Diamin, über einen weiten Bereich variabel. Bevorzugt findet die Umsetzung bei einer Temperatur von 150 bis 250 °C, besonders bevorzugt von 160 bis 230°C statt (thermische Umsetzung). Bevorzugt findet die Umsetzung bei einem Druck von 5 bis 40 bar, besonders bevorzugt von 5 bis 25 bar statt. Die Reaktionszeit, variiert deutlich abhängig von der Natur der umgesetzten Stoffe und beträgt im Allgemeinen fünf bis 40 Stunden.

In einer Ausführungsform besteht das erfindungsgemäße Verfahren zur Herstellung von Perylenpigmenten aus mehreren Verfahrensschritten die zeitlich nacheinander oder auch gleichzeitig ablaufen können. Beispielsweise umfasst das erfindungsgemäße Verfahren die folgenden Verfahrensschritte:
(a) Zugabe wässriges Reaktionsmedium,
(b) Vorlage Perylentetracarbonsäure oder deren funktioneller Derivate,
(c) optional, Zugabe inertes organisches Lösungsmittel,
(d) optional, Zugabe oberflächenaktive Substanzen,
(e) Zugabe sekundäres oder tertiäres Amin,
(f) optional, Homogenisierung der Reaktionsmischung
(g) Zugabe aromatisches Diamin,
(h) Thermische Umsetzung,
(i) Abkühlen,
(j) optional, Zugabe anorganisches basisches Salz,
(k) optional, Aufarbeitung.

Die Reihenfolge der Schritte (a) - (g) ist variabel, d.h. die Schritte (a) bis (k) können in beliebiger Reihenfolge durchgeführt werden. Bevorzugt erfolgen die Schritte (a) - (k) zeitlich nacheinander in der oben angegebenen Reihenfolge. Es versteht sich, dass die Zugabe der einzelnen Komponenten sowohl kontinuierlich, als auch batchweise erfolgen kann. Die Homogenisierung der Reaktionsmischung kann bei erhöhten Temperaturen, beispielsweise im Bereich von 50 bis 90°C erfolgen, die jedoch niedriger sind als die Temperaturen der thermischen Umsetzung. Weiterhin kann bei der thermischen Umsetzung die Erhöhung der Temperatur sowohl kontinuierlich als auch stufenweise bis zum gewünschten Endwert der Temperatur erfolgen. Gleiches gilt für das Abkühlen.

Das erfindungsgemäße Verfahren kann in beliebigen Apparaturen durchgeführt werden, die die Ausführung der oben beschriebenen Verfahrensschritte erlauben. Die Apparaturen zur Durchführung der einzelnen (optionalen) Verfahrensschritte sind dem Fachmann wohl bekannt.

In einer Ausführungsform des erfindungsgemäßen Verfahrens umfasst der Schritt der Aufarbeitung eine Abtrennung, beispielsweise durch Filtration, und eine Reinigung, beispielsweise durch Waschprozesse, der Perylenpigmente.

Die beim erfindungsgemäßen Verfahren zunächst erhaltenen Rohpigmente, deren Detailstruktur, abhängig von den jeweils konkret gewählten Reaktionsbedingungen oder Ausgangsstoffen variieren kann, fallen nach Aufarbeitung meistens als teilamorphes Pulver oder in Form heterogener Kristalle an, die in einem ein- oder mehrstufigen Umarbeitungsschritt dem Anwendungsmedium, beispielsweise Kunststoffen, angepasst werden können. Solche Verfahren sind beispielsweise in der WO 2005/078023 beschrieben (S. 7, Z. 37 - S. 14, Z. 31) auf die in diesem Zusammenhang explizit Bezug genommen wird.

Die Einarbeitung der nach dem erfindungsgemäßen Verfahren hergestellten Perylenpigmente bzw. die nach den erwähnten Umarbeitungsschritten erhaltenen Pigmente in Kunststoffe kann nach allen bekannten Methoden erfolgen, z.B. durch gemeinsames Extrudieren, Walzen, Kneten, Pressen oder Mahlen, wobei die Kunststoffe, enthaltend die Perylenpigmente, zu Kunststoffformkörpern, Endlosprofielen, Platten Folien, Fasern, Filmen und Beschichtungen verarbeitet werden können.

Weitere Verarbeitungsmöglichkeiten, auch für den Einsatz in hochmolekularen anoranischen Materialien, sind in der WO 2005/078023, S. 15, Z. 22- S. 18, Z. 6 angegeben, auf die in diesem Zusammenhang explizit Bezug genommen wird.

Die erfindungsgemäßen Perylenpigmente bzw. die nach den oben erwähnten Umarbeitungsschritten erhaltenen Pigmente (WO 2005/078023) eignen sich hervorragend zur Einfärbung von hochmolekularen organischen und anorganischen Materialien natürlicher und synthetischer Herkunft.

Weitere Anwendungsmöglichkeiten sind in der WO 2005/078023, S. 15, Z. 22- S. 18, Z. 6 angegeben, auf die in diesem Zusammenhang vollinhaltlich Bezug genommen wird. Weiterhin ist eine Verwendung der erfindungsgemäß hergestellten Perylenpigmente als Aktivkomponenten in der Photovoltaik möglich.

Als Beispiele für hochmolekulare synthetische organische Materialien seien genannt:
Polyolefine, wie Polyethylen, Polypropylen, Polybutylen, Polyisobutylen und Poly-4-methyl-1-penten, Polyolefincopolymere, wie Luflexen^{®} (Basell), Nordel^{®} (Dow) und En-gage^{®} (DuPont), Cycloolefincopolymere, wie Topas^{®} (Celanese), Polytetrafluoroethylen (PTFE), Ethylen/Tetrafluoroethylen-Copolymere (ETFE), Polyvinylidendifluorid (PVDF), Polyvinylchlorid (PVC), Polyvinylidenchlorid, Polyvinylalkohole, Polyvinylester, wie Polyvinylacetat, Vinylestercopolymere, wie Ethylen/Vinylacetat-Copolymere (EVA), Polyvinylalkanale, wie Polyvinylacetal und Polyvinylbutyral, (PVB), Polyvinylketale, Polyamide, wie Nylon^{®} [6], Nylon [12] und Nylon [6,6] (DuPont), Polyimide, Polycarbonat, Polycarbonat-Copolymere und physikalische Blends von Polycarbonaten mit Acryl-Butadien-Styrol-Copolymeren, Acrylnitril-Styrol-Acrylester-Copolymeren, Polymethylmethacrylaten, Polybutylacrylaten, Polybutylmethacrylaten, Polybutylenterephthalaten und Polyethylenterephthalaten, Polyester wie Polyethylenterephthalat (PET), Polybutylenterephthalat (PBT) und Polyethylennaphthalat (PEN), Copolymerisate, Umesterungsprodukte und physikalische Gemische (Blends) der zuvor genannten Polyalkylenterephthalate, Poly(meth)acrylate, Polyacrylamide, Polyacrylnitril, Poly(meth)acrylat/ Polyvinylidendifluorid-Blends, Polyurethane, Polystyrol, Styrolcoplymere, wie Styrol/ Butadien-Copolymere, Styrol/-Acrylnitril-Copolymere (SAN), Styrol/Ethylmethacrylat-Copolymere, Styrol/Butadien/Ethylacrylat-Copolymere, Styrol/Acrylnitril/Methacrylat-Copolymere, Acrylnitril/Butadien/Styrol-Copolymere (ABS) und Methacrylat/Butadien/- Styrol-Copolymere (MBS), Polyether wie Polyphenylenoxid, Polyetherketone, Polysulfone, Polyethersulfone, Polyglykole wie Polyoxymethylen (POM), Polyaryle wie Polyhenylen, Polyarylenvinylene, Silicone, lonomere, thermoplastische und duroplastische Polyurethane sowie deren Mischungen.

Als Beispiele für hochmolekulare synthetische anorganische Materialien seien aufgeführt:
niedrigschmelzende Borosilikat-Glasfritts, gegebenenfalls organisch modifizierte Silikatsole und -gele, über einen Sol-Gel-Prozeß hergestellte, gegebenenfalls dotierte Silikat-, Aluminat-, Zirkonat- und Alumosilikatbeschichtungen und Schichtsilikate.

Für viele Anwendungen kann es vorteilhaft sein, zunächst flüssige wasserbasierende Präparationen der erfindungsgemäßen Perylenpigmente bzw. der nach den erwähnten Umarbeitungsschritten erhaltenen Pigmente (WO 2005/078023), herzustellen, die Wasser oder Gemische von Wasser und organischen Lösungsmitteln als flüssige Phase enthalten.

Ebenfalls vorteilhaft ist ein Einsatz zuvor separat hergestellter Pigmentpräparationen auf Basis eines Polymeren oder eines Polymer-Blends, eines oder mehrerer Polyolefinwachse oder von Mischungen hieraus zur Erzielung homogener, farbstarker Einfärbungen bei niedrigschmelzenden Polymeren (z.B. den meisten gängigen Polyolefinen) oder solchen mit niedriger Schmelzviskosität (z.B. weichgemachtem PVC und PVB sowie blasformbarem PET). Während das bei den polymerbasierenden Pigmentpräparationen ("Masterbatch", "Compound") eingesetzte Trägerpolymer(blend) im allgemeinen identisch mit dem einzufärbenden hochmolekularen synthetischen organischen Material ist, finden zur Herstellung polyolefinwachsbasierender Pigmentpräparationen als Trägermaterial insbesondere homo- und copolymere PE- und PP-Wachse wie Luwax^{®} A (Ethylen-Homopolymerisat; BASF), Luwax EVA (Ethylen-Vinylacetat-Copolymerisat; BASF) oder Licowax^{®} PP 230 (Propylen-Homopolymerisat; Clariant) Verwendung.

Weiterhin lassen sich die erfindungsgemäß hergestellten Perylenpigmente beim Laserschweißen einsetzen.

Weitere Gegenstände der Erfindung sind daher die Verwendung von erfindungsgemäß hergestellten Perylenpigmenten beim Laserschweißen und ein Verfahren zum Laserschweißen von Materialien, wobei die Materialien zunächst mit Perylenpigmenten in Kontakt gebracht werden.

Das Schweißen von Materialien, insbesondere von Kunststoffen erfolgt durch Absorption von Laserenergie im oder auf dem Material durch die zugesetzten lasersensitiven Perylenpigmente, die durch Absorption der Laserenergie zu einer lokalen Erhitzung des Materials führen. Beim Laserscheißen von beispielsweise zwei Materialien wird im Fügebereich der zu verschweißenden Materialien durch Absorption der Laserenergie eine starke Erwärmung erzeugt, so dass die Materialien aufschmelzen und beide Materialien miteinander verschmelzen. Häufig ist es ausreichend, wenn nur eines der Materialien lasersensitive Perylenpigmente im Material oder als Schicht an der Oberfläche enthält. Die Laserschweißbarkeit ist Abhängig von der Natur der Materialien, insbesondere Kunststoffe sowie von der Wellenlänge und der Strahlungsleistung des eingesetzten Lasers. Beispielsweise kommen für das erfindungsgemäße Verfahren zum Laserschweißen Farbstoff-, CO₂-, Excimer-, oder ND:YAG-Laser in Frage.

In der Regel beträgt der Gehalt an Perylenpigmenten insgesamt zwischen von 0,0001 bis 1 Gew.-% bezogen auf das zu verschweißende Material. Bevorzugt beträgt der Gehalt von 0,001 bis 0,1 Gew.-%. Insbesondere ergibt sich in diesem Bereich von 0,001 bis 0,1 Gew.-% eine ausreichende Verschweißbarkeit von Kunststoffen.

Die erfindungsgemäß hergestellten Perylenpigmente können, wie oben beschrieben, mit Hilfe von dem Fachmann bekannten Verfahren, wie beispielsweise durch Extrusion, in praktisch alle Kunststoffe eingearbeitet werden, insbesondere um diesen Laserschweißbarkeit zu verleihen. Ebenfalls ist eine Einarbeitung in Blends möglich, die als Komponenten oben genannte Kunststoffe beinhalten, oder in von diesen Klassen abgeleitete Polymere, die durch nachträgliche Reaktionen verändert wurden. Diese Materialien sind in großer Vielfalt bekannt und kommerziell erhältlich.

Weiterhin lassen sich die erfindungsgemäß hergestellten Perylenpigmente beim Wärmemanagement oder zur Wärmedämmung einsetzen.

Weitere Gegenstände der Erfindung sind daher die Verwendung von erfindungsgemäß hergestellten Perylenpigmenten im Wärmemanagement und ein Verfahren zum Wärmemanagement oder zur Wärmedämmung, wobei die Materialien zunächst mit erfindungsgemäß hergestellten Perylenpigmenten in Kontakt gebracht werden. Im Allgemeinen bewirken die Perylenpigmente eine IR-Absorption und ermöglichen damit das Wärmemanagement durch die Materialien.

Bevorzugt befinden sich die Perylenpigmente in Kontakt mit Fenstern, insbesondere Fensterscheiben. Durch das erfindungsgemäße Verfahren wird die IR-Transmission durch das Fenster reguliert und somit ein Wärmemanagement des hinter dem Fenster liegenden Raums ermöglicht. Hierbei kann es sich natürlich neben Fenstern in Gebäuden beispielsweise auch um Fenster von Automobilen, Flugzeugen oder Maschinen mit Fahrerkanzeln handeln.

Das erfindungsgemäße Verfahren gestattet die effiziente Herstellung von Perylenpigmenten. Im Rahmen des erfindungsgemäßen Verfahrens kann auf den Einsatz organischer Lösungsmittel verzichtet werden. Das erfindungsgemäße Verfahren zeichnet sich durch eine einfache Reaktionsführung aus mit der Perylenpigmente in hoher Reinheit bei hohen Umsätzen zugänglich sind.

Die vorstehenden Ausführungsformen des erfindungsgemäßen Verfahrens und die nachfolgenden Beispiele verdeutlichen beispielhaft die vorliegende Erfindung. Es sind jedoch viele weitere Variationen des Verfahrens und Kombinationen der Merkmale des erfindungsgemäßen Verfahrens für den Fachmann denkbar, ohne den Rahmen der Patentansprüche zu verlassen.

### Beispiele

### Beispiel 1

In einem Autoklaven wurden 200 g Perylenbisanhydrid als 50 Gew.-%iger wasserfeuchter Presskuchen, entsprechend 0,255 mol, 1100 g Wasser und 22 g Piperazin, entsprechend 0,255 mol, vorgelegt und bei 70 °C durch Rühren homogenisiert. Nach Zugabe von 69 g 1,2-Diaminobenzol, entsprechend 0,637 mol, wurde die Reaktionssuspension innerhalb von vier Stunden auf 210 °C erhitzt und 18 Stunden bei dieser Temperatur gerührt.

Nach dem Abkühlen auf 70 °C wurden 20 g Pottasche, gelöst in 1000ml Wasser, zugegeben und bei 70 °C gerührt. Die Suspension wurde abfiltriert, nacheinander mit Wasser, 10%-iger Essigsäure und erneut Wasser gewaschen. Nach dem Trocknen bei 80 °C erhielt man 133 g Perylenpigment, entsprechend 97,5% der Theorie in Form eines schwarzen Pulvers.

### Beispiel 2

In einem Autoklaven wurden 100 g Perylenbisanhydrid, vorzerkleinert in einer Kugelmühle, entsprechend 0,255 mol, 1000 g Wasser und 26 g N-Methylcyclohexylamin, entsprechend 0,230 mol, vorgelegt und bei 70 °C durch Rühren homogenisiert. Nach Zugabe von 69 g 1,2-Diaminobenzol, entsprechend 0,637 mol, wurde die Reaktionssuspension auf 205 °C erhitzt und 24 Stunden bei dieser Temperatur gerührt.

Nach dem Abkühlen auf 70 °C wurden 30 g Pottasche, gelöst in 1000ml Wasser, zugegeben und bei 70 °C gerührt. Die Suspension wurd abfiltriert, nacheinander mit 2,5%-iger wässriger Pottaschelösung, Wasser, 5%-iger Schwefelsäure und erneut Wasser gewaschen. Nach dem Trocknen bei 80 °C erhielt man 129 g Perylenpigment, entsprechend 94,3% der Theorie in Form eines schwarzen Pulvers.

### Beispiel 3

In einem Autoklaven wurden 100 g Perylenbisanhydrid, vorzerkleinert in einer Kugelmühle, entsprechend 0,255 mol, 900 g Wasser und 100 g N-Methylimidazol vorgelegt und bei 70 °C durch Rühren homogenisiert. Nach Zugabe von 69 g 1,2-Diaminobenzol, entsprechend 0,637 mol, wurde die Reaktionssuspension auf 210 °C erhitzt und 24 Stunden bei dieser Temperatur gerührt.

Nach dem Abkühlen auf 70 °C wurden 30 g Pottasche, gelöst in 1000ml Wasser, zugegeben und bei 70 °C gerührt. Die Suspension wurde abfiltriert, nacheinander mit 2,5%-iger wässriger Pottaschelösung, Wasser, 5%-iger Schwefelsäure und erneut Wasser gewaschen. Nach dem Trocknen bei 80 °C erhielt man 133 g Perylenpigment, entsprechend 97,5% der Theorie in Form eines schwarzen Pulvers.

### Beispiel 4

In einem Autoklaven wurden 100 g Perylenbisanhydrid, vorzerkleinert in einer Kugelmühle, entsprechend 0,255 mol, 750 g Wasser und 69 g 1,2-Diaminobenzol, entsprechend 0,637 mol, auf 205 °C erhitzt und 24 Stunden bei dieser Temperatur gerührt. Nach dem Abkühlen auf 70 °C wurden 30 g Pottasche, gelöst in 1000ml Wasser, zugegeben und bei 70 °C gerührt. Die Suspension wurde abfiltriert, nacheinander mit 2,5%-iger wässriger Pottaschelösung, Wasser, 5%-iger Schwefelsäure und erneut Wasser gewaschen. Nach dem Trocknen bei 80 °C erhielt man 128 g Perylenpigment, entsprechend 93,8% der Theorie in Form eines schwarzen Pulvers.

### Beispiel 5

In einem Autoklaven wurden 100 g Perylenbisanhydrid, vorzerkleinert in einer Kugelmühle, entsprechend 0,255 mol, 800 g Wasser und 16 g Pyrrolidin, entsprechend 0,230 mol, vorgelegt und bei 70 °C durch Rühren homogenisiert. Nach Zugabe von 69 g 1,2-Diaminobenzol, entsprechend 0,637 mol, wurde die Reaktionssuspension auf 160 °C erhitzt und 24 Stunden bei dieser Temperatur gerührt.

Nach dem Abkühlen auf 70 °C wurden 30 g Pottasche, gelöst in 1000 ml Wasser, zugegeben und bei 70 °C gerührt. Die Suspension wurde abfiltriert, nacheinander mit 2,5%-iger wässriger Pottaschelösung, Wasser, 5%-iger Schwefelsäure und erneut Wasser gewaschen. Nach dem Trocknen bei 120 °C und 100 mbar erhält man 128 g Perylenpigment, entsprechend 93,6% der Theorie in Form eines schwarzen Pulvers.

### Beispiel 6

In einem Autoklaven wurden 100 g Perylenbisanhydrid, entsprechend 0,255 mol, 1000 g Wasser und 26 g N-Methylcyclohexylamin, entsprechend 0,230 mol, vorgelegt und bei 70 °C durch Rühren homogenisiert. Nach Zugabe von 83 g 1,8-Diaminonaphthalin, entsprechend 0,523 mol, wurde die Reaktionssuspension auf 160 °C erhitzt und acht Stunden bei dieser Temperatur gerührt.

Nach dem Abkühlen auf 70 °C wurden 30 g Pottasche, gelöst in 1000ml Wasser, zugegeben und bei 70 °C gerührt. Die Suspension wurde abfiltriert, nacheinander mit 2,5%-iger wässriger Pottaschelösung, Wasser, 5%-iger Essigsäure und erneut Wasser gewaschen. Nach dem Trocknen bei 100 °C und 100 mbar erhält man 161 g Perylenpigment, entsprechend 99% der Theorie in Form eines schwarzen Pulvers.

### Beispiel 7

In einem Autoklaven wurden 116 g Perylenbisanhydrid, entsprechend 0,290 mol, 1200 g Wasser und 24 g Piperazin, entsprechend 0,287 mol, vorgelegt und bei 90 °C durch Rühren homogenisiert. Nach Zugabe von 92 g 1,8-Diaminonaphthalin, entsprechend 0,573 mol, wurde die Reaktionssuspension auf 210 °C erhitzt und 14 Stunden bei dieser Temperatur gerührt.

Nach dem Abkühlen auf 70 °C wurden 30 g Pottasche, gelöst in 1300ml Wasser, zugegeben und die Suspension bei 85 °C gerührt. Die Suspension wurde abfiltriert, nacheinander mit Wasser, 10%-iger Essigsäure und erneut Wasser gewaschen. Nach dem Trocknen bei 100 °C und 100 mbar erhält man 184 g Perylenpigment, entsprechend > 99% der Theorie in Form eines schwarzen Pulvers.

## Patentansprüche

1. Verfahren zur Herstellung von Perylenpigmenten der allgemeinen Formel (Ia) oder (Ib) 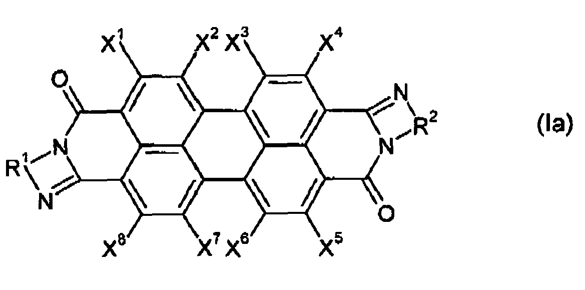 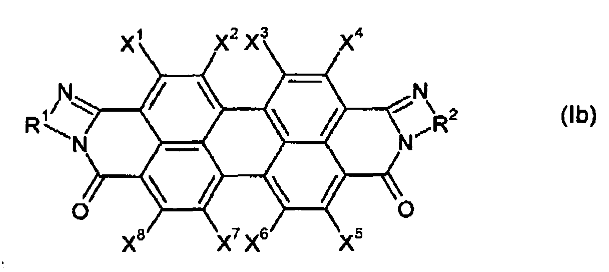 oder deren Gemischen, durch Umsetzung von Perylentetracarbonsäuren oder deren funktionellen Derivaten mit aromatischen Diaminen, mit
R¹, R² unabhängig voneinander, gleich oder verschieden, Phenylen, Naphthylen oder Pyridylen,
wobei R¹, R² jeweils ein- oder mehrfach durch C₁-C₂₂-Alkyl, C₃-C₂₂-Alkenyl, C₁-C₂₂-Alkoxy, Hydroxy und/oder Halogen substituiert sein können,
X¹, X², X³, X⁴, X⁵, X⁶, X⁷, X⁸ unabhängig voneinander, gleich oder verschieden, Wasserstoff oder Halogen sein können,
**dadurch gekennzeichnet, dass**, die Umsetzung in Gegenwart eines sekundären oder tertiären Amins in einem wäßrigen Reaktionsmedium durchgeführt wird.

2. Verfahren nach Anspruch 1, wobei R¹ und R² gleich sind und unsubstituiertem Phenylen oder Naphthylen entsprechen.

3. Verfahren nach Anspruch 2, **dadurch gekennzeichnet, dass** das wässrige Reaktionsmedium im wesentlichen keine organischen Lösungsmittel enthält.

4. Verfahren nach den Ansprüchen 1 oder 2, **dadurch gekennzeichnet, dass** das wässrige Reaktionsmedium bis zu 30 Ges.-% eines organischen Lösungsmittels enthält.

5. Verfahren nach Anspruch 4, wobei das organische Lösungsmittel ein aromatischer stickstoffhaltiger Heterocyclus ist.

6. Verfahren nach Anspruch 5, wobei der aromatische stickstoffhaltige Heterocyclus N-Methylimidazol oder Imidazol ist.

7. Verfahren nach den Ansprüchen 1 bis 6, **dadurch gekennzeichnet, dass** als sekundäres oder tertiäres Amin Piperazin, N-(2-Hydroxyethyl)piperazin, Diethanolamin, N,N'-Dimethylpiperazin, N-Ethylpiperazin, N-Methylcyclohexylamin, Imidazol, N-Methylimidazol oder Pyrrolidin verwendet wird.

8. Verfahren nach den Ansprüchen 1 bis 7, **dadurch gekennzeichnet, dass** bei der Umsetzung von 0,5 bis 2,0 Mol-Äquivalenten eines sekundären oder tertiären Amins bezogen auf die Perylentetracarbonsäuren oder deren funktionellen Derivate verwendet werden.

9. Verfahren nach den Ansprüchen 1 bis 8, **dadurch gekennzeichnet, dass** die Umsetzung bei Temperaturen im Bereich von 150 bis 250 °C durchgeführt wird.

10. Verfahren nach den Ansprüchen 1 bis 9, **dadurch gekennzeichnet, dass** die Umsetzung zusätzlich in Gegenwart von oberflächenaktiven Substanzen durchgeführt wird.

## Claims

1. A process for preparing perylene pigments of the general formula (Ia) or (Ib) 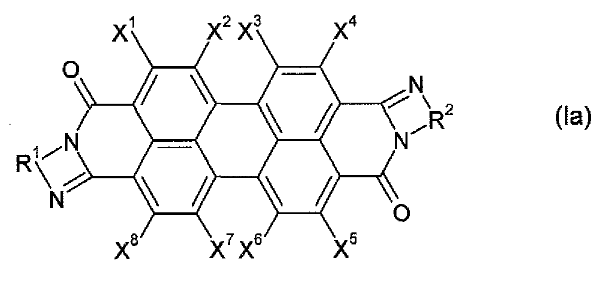 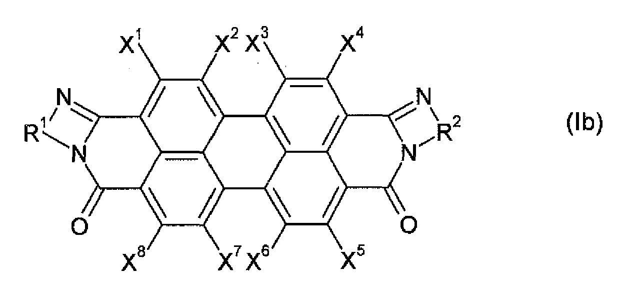 or mixtures thereof, by reacting perylenetetracarboxylic acids or functional derivatives thereof with aromatic diamines, where
R¹, R² are the same or different and are each independently phenylene, naphthylene or pyridylene,
where R¹, R² may each be mono- or polysubstituted by C₁-C₂₂-alkyl, C₃-C₂₂-alkenyl, C₁-C₂₂-alkoxy, hydroxyl and/or Halogen,
X¹, X², X³, X⁴, X⁵, X⁶, X⁷, X⁸ may be the same or different and may each independently be hydrogen or halogen,
which comprises performing the reaction in the presence of a secondary or tertiary amine in an aqueous reaction medium.

2. The process according to claim 1, wherein R¹ and R² are the same and are each unsubstituted phenylene or naphthylene.

3. The process according to claim 2, wherein the aqueous reaction medium comprises essentially no organic solvent.

4. The process according to claims 1 and 2, wherein the aqueous reaction medium comprises up to 30% by weight of an organic solvent.

5. The process according to claim 4, wherein the organic solvent is an aromatic nitrogen-containing heterocycle.

6. The process according to claim 5, wherein the aromatic nitrogen-containing heterocycle is N-methylimidazole or imidazole.

7. The process according to claims 1 to 6, wherein the secondary or tertiary amine used is piperazine, N-(2-hydroxyethyl)piperazine, diethanolamine, N,N'-dimethylpiperazine, N-ethylpiperazine, N-methylcyclohexylamine, imidazole, N-methylimidazole or pyrrolidine.

8. The process according to claims 1 to 7, wherein the reaction uses from 0.5 to 2.0 molar equivalents of a secondary or tertiary amine based on the perylenetetracarboxylic acids or functional derivatives thereof.

9. The process according to claims 1 to 8, wherein the reaction is performed at temperatures in the range from 150 to 250°C.

10. The process according to claims 1 to 9, wherein the reaction is performed additionally in the presence of surface-active substances.

## Revendications

1. Procédé pour la préparation de pigments pérylène de formule générale (Ia) ou (Ib) 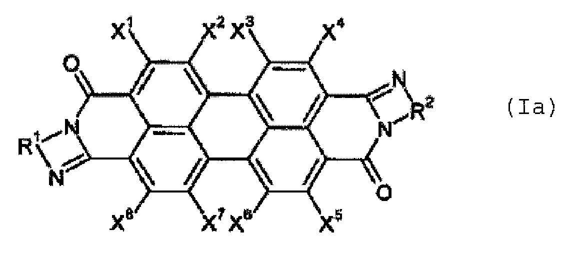 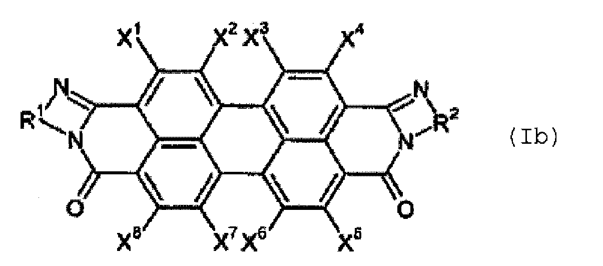 ou de mélanges de ceux-ci, par mise en réaction d'acides pérylènecarboxyliques ou de dérivés fonctionnels de ceux-ci avec des diamines aromatiques, où
R¹, R² indépendamment l'un de l'autre, identiques ou différents, représentent un groupe phénylène, naphtylène ou pyridylène,
R¹, R² pouvant être substitués chacun par alkyle en C₁-C₂₂, alcényle en C₃-C₂₂, alcoxy en C₁-C₂₂, hydroxy ou halogène,
X¹, X², X³, X⁴, X⁵, X⁶, X⁷, X⁸ indépendamment les uns des autres, identiques ou différents, peuvent être des atomes d'hydrogène ou d'halogène,
**caractérisé en ce que** la réaction est effectuée en présence d'une amine secondaire ou tertiaire, dans un milieu réactionnel aqueux.

2. Procédé selon la revendication 1, dans lequel R¹ et R² sont identiques et correspondent à un groupe phénylène ou naphtylène non substitué.

3. Procédé selon la revendication 2, **caractérisé en ce que** le milieu réactionnel aqueux ne contient pratiquement pas de solvant organique.

4. Procédé selon la revendication 1 ou 2, **caractérisé en ce que** le milieu réactionnel aqueux contient jusqu'à 30 % en poids d'un solvant organique.

5. Procédé selon la revendication 4, dans lequel le solvant organique est un hétérocycle aromatique azoté.

6. Procédé selon la revendication 5, dans lequel l'hétérocycle aromatique azoté est le N-méthylimidazole ou l'imidazole.

7. Procédé selon les revendications 1 à 6, **caractérisé en ce qu'**on utilise comme amine secondaire ou tertiaire la pipérazine, la N-(2-hydroxyéthyl)-pipérazine, la diéthanolamine, la N,N'-diméthyl-pipérazine, la N-éthylpipérazine, la N-méthyl-cyclohexylamine, l'imidazole, le N-méthylimidazole ou la pyrrolidine.

8. Procédé selon les revendications 1 à 7, **caractérisé en ce que** dans la réaction on utilise de 0,5 à 2,0 équivalents molaires d'une amine secondaire ou tertiaire par rapport aux acides pérylène-tétracarboxyliques ou à leurs dérivés fonctionnels.

9. Procédé selon les revendications 1 à 8, **caractérisé en ce qu'**on effectue la réaction à des températures dans la plage de 150 à 250 °C.

10. Procédé selon les revendications 1 à 9, **caractérisé en ce qu'**on effectue la réaction en présence de substances tensioactives.
